# EUROPÄISCHE PATENTSCHRIFT

(11) **EP 0 622 270 B1**
(45) Veröffentlichungstag und Bekanntmachung des Hinweises auf die Patenterteilung: **16.06.1999**
(21) Anmeldenummer: 93120580.1
(22) Anmeldetag: 21.12.1993
(51) Int. Cl.: B60N 3/00, B60N 3/10, B60R 7/06

(54) **Am Armaturenbrett eines Kraftfahrzeuges angeordnete Ablage**
Tray placed on the dashboard of automotive vehicles
Tablette disposée sur la planche de bord de véhicules automobiles

(30) Priorität: 29.04.1993 DE 9306431 U
(43) Veröffentlichungstag der Anmeldung: 02.11.1994
(73) Patentinhaber: Langner, Elvira, 44803 Bochum (DE); Zimmermann, Gisela, 44791 Bochum (DE)
(72) Erfinder: Zimmermann, Gerd, (DE)

(56) Entgegenhaltungen:
- EP-A- 0 286 038
- EP-A- 0 297 152
- DE-A- 2 506 493
- DE-U- 9 213 988
- DE-U- 9 306 431
- FR-A- 2 045 583
- FR-A- 2 174 393
- US-A- 2 628 140
- US-A- 3 104 895
- US-A- 5 170 720

## Beschreibung

Die Erfindung betrifft eine am Armaturenbrett eines Kraftfahrzeuges angeordnete Ablage, welche als auf dem Armaturenbrett aufliegendes und als an einer Frontscheibe lösbar abgestütztes Tablett ausgebildet ist, wobei an der Tablettunterseite wenigstens eine Stütze angeordnet ist und das Tablett einen Abstützpunkt auf dem Armaturenbrett frontscheibenseitig um etwa zwei Drittel und armaturenseitig um etwa ein Drittel überragt.

Durch das US-Patent 26 28 140 ist eine Ablage der eingangs beschriebenen Gattung bekannt, welche armaturenseitig über zwei Konsolen auf dem Armaturenbrett abgestützt ist. Die Abstützung an der Frontscheibe erfolgt über einerseits an den vorgenannten Konsolen befestigte, andererseits in die Defrosterschlitze im Bereich der Frontscheibe einsetzbare Federelemente. Dies hat zur Folge, daß die Breite bzw. die Anordnung der Konsolen zumindest im wesentlichen an die örtliche Lage der Defrosterschlitze angepaßt sein muß, welche bekanntlich je nach Fahrzeugtyp unterschiedlich ausgebildet und angeordnet sind. Die universelle Verwendbarkeit der bekannten Ablage ist damit stark eingeschränkt. Außerdem kann das Einsetzen der Federelemente in die Defrosterschlitze zu einer Beschädigung derselben führen. Um eine ausreichende Anlage der Ablage an der Frontscheibe zu gewährleisten, ist es ferner bei der bekannten Vorrichtung erforderlich, nicht nur den Verlauf der der Frontscheibe zugewandten Stirnseite der Ablage an den Verlauf der (jeweiligen) Frontscheibe anzupassen, sondern auch zur Vermeidung von Längsbewegungen des Tabletts gegenüber dem Armaturenbrett im Tablett eine mit einem die Frontscheibe unterteilenden Trennholm korrespondierende Ausnehmung vorzusehen. Auch diese Maßnahme schränkt die universelle Verwendbarkeit stark ein.

Insbesondere soweit Lastkraftwagen betroffen sind, mit denen nicht nur Kurzstrecken zurückgelegt werden, ist es wünschenswert, daß dem Fahrer beliebiger Lastkraftwagen eine einfach montierbare und demontierbare Ablagefläche zur Verfügung steht. Dies gilt insbesondere für Zeiten der Rast bzw. der gesetzlich vorgeschriebenen Ruhepausen; zu den vorgenannten Zeiten ist es für den Fahrer zweckmäßig, wenn im Bereich der Fahrerkabine eine Ablagefläche derart ausreichender Größe zur Verfügung steht, daß er auf der Ablagefläche während der Essenspausen Proviant sowie Zubehör wie Tassen, Dosen und dgl. abstellen kann. Da derartige Ablagen erfahrungsgemäß auch während der Fahrt im Rahmen ihres bestimmungsgemäßen Gebrauchs benutzt werden, ist eine zuverlässige, den Erschütterungen während der Fahrt Rechnung tragende Befestigung der Ablage erforderlich.

Ausgehend von der vorstehenden Überlegung liegt der Erfindung die Aufgabe zugrunde, insbesondere für Lastkraftwagen eine Ablage zu schaffen, die universell für alle oder zumindest die überwiegende Zahl von Lastkraftwagen verwendbar ist, wobei eine Anpassung an unterschiedliche Ausgestaltungsformen der Armaturenbretter ermöglicht werden soll. Weiterhin soll die Ablage eine ausreichend große Ablagefläche bzw. ausreichend große Ablageflächen aufweisen, auf denen die abzulegenden Gegenstände rutschsicher abgestellt werden können, sie soll einfach im Bereich des Armaturenbrettes in Reichweite des Fahrers zu montieren sein, darüber hinaus aber auch leicht lösbar so angeordnet sein, daß sie im Bedarfsfalle mit wenigen Handgriffen demontiert und raumsparend im Fahrzeug verstaut werden kann.

Die Erfindung löst die gestellte Aufgabe mit der Lehre nach Anspruch 1.

Hiernach weist die Ablage eine Stütze auf, welche als höhenverstellbarer, frontscheibenseitig schwenkbar am Tablett angelenkter Stützbügel ausgebildet ist, dessen Schwenkgelenk mittels einer Klemmschraube arretierbar ist, wobei an der der Frontscheibe zugewandten Stirnseite des Tabletts mehrere Haltekonsolen für Saugnäpfe angeordnet sind, und die der Frontscheibe zugewandten Begrenzungsflächen der Haltekonsolen im wesentlichen mit der Frontscheibe fluchtend verlaufen.

Wenngleich im wesentlichen vorgesehen ist, das erfindungsgemäße Tablett während der Rast- und Ruhezeiten, d.h. bei stehendem Kraftfahrzeug einzusetzen, ist es jedoch auch möglich, aufgrund der kennzeichnenden Merkmale, mit denen eine zuverlässige und sichere Abstützung des Tabletts auf dem Armaturenbrett erreicht wird, das Tablett während der Fahrt in seiner Gebrauchsposition zu belassen.

Weitere Merkmale der Erfindung sind durch die Unteransprüche gekennzeichnet.

Das Tablett selbst ist erfindungsgemäß so ausgebildet, daß es mehrere, durch Profilstege getrennte Ablageflächen aufweist, wobei die einzelnen Ablageflächen eine unterschiedliche Tiefe (Anspruch 2) und/oder Außenkonturen aufweisen können, die den Außenkonturen des abzulegenden Gegenstandes entsprechen (Anspruch 3). Die Außenkonturen können beispielsweise der Außenkontur einer Tasse, einer Dose, einer Flasche, Bestecken oder beliebigen quadratischen Gegenständen angepaßt sein.

Im Ergebnis wird mit der Erfindung eine Ablage, insbesondere für Lastkraftwagen vorgeschlagen, die universell anwendbar ist, eine große, durch Profilstege unterteilte Ablagefläche aufweist, die leicht montierbar und demontierbar und mit einfachen Hilfsmitteln zuverlässig am Armaturenbrett bzw. an der Frontscheibe abstützbar ist.

Die Erfindung wird nachfolgend anhand eines Ausführungsbeispieles näher erläutert.

Es zeigen:
- Fig. 1: das Tablett in perspektivischer Darstellung in Draufsicht
- Fig. 2: eine Seitenansicht des Tabletts, wobei das Armaturenbrett im Querschnitt angedeutet ist
- Fig. 3: den Schnitt nach der Linie III-III nach Fig. 1

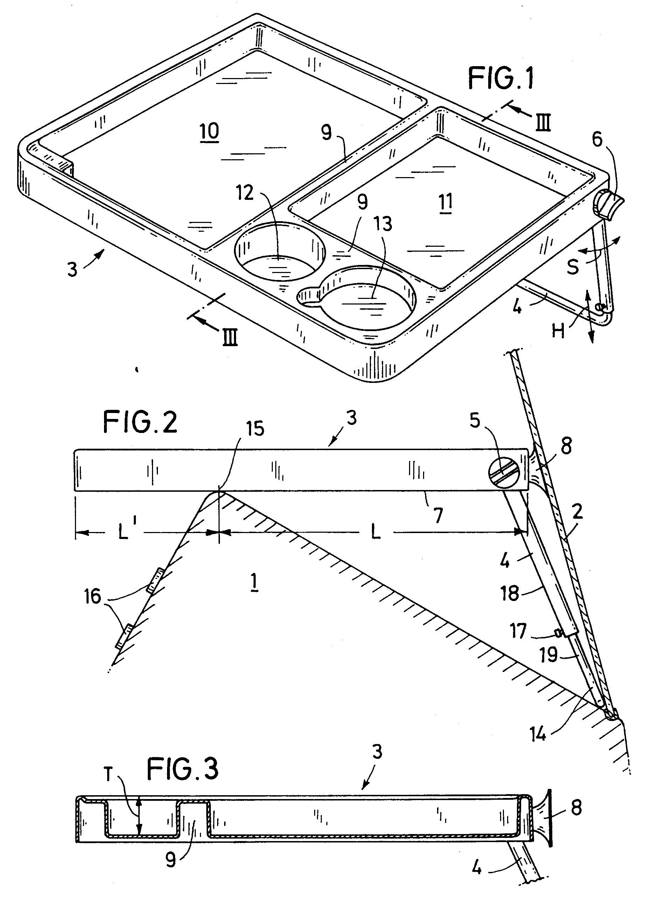

In der Fig. 2 ist das nur andeutungsweise dargestellte Armaturenbrett mit 1 bezeichnet; an der in der Bildebene rechten Seite ist die Frontscheibe 2 mit ihrem unteren Ende am Armaturenbrett 1 abgestützt. Im Abstützpunkt 15 liegt das allgemein mit 3 bezeichnete Tablett auf dem Armaturenbrett 1 auf. Aus der Fig. 2 ist ferner ersichtlich, daß die frontscheibenseitig überstehende Länge L des Tabletts 3 etwa zwei Drittel und die armaturenseitig (die Armaturen sind bei 16 angedeutet) überstehende Länge L' etwa ein Drittel der gesamten Länge des Tablettes 3 beträgt.

An der Frontscheibe ist das Tablett 3 zum einen über Saugnäpfe 8 abgestützt; zum anderen in dem durch die Frontscheibe 2 und das Armaturenbrett 1 gebildeten Winkel über einen mit 4 bezeichneten Stützbügel. Der Der Stützbügel 4 besteht aus zwei Teleskoprohren 18 und 19, die über eine Feststellschraube 17 gegeneinander verspannt werden können.

Der Stützbügel 4 ist in einem Schwenkgelenk 5 am Tablett 3 drehbar gelagert; das Schwenkgelenk 5 kann über eine Klemmschraube 6 arretiert werden.

Zur Montage des Tabletts 3 ist es deshalb lediglich erforderlich, nach dem Auflegen des Tabletts 3 auf den Abstützpunkt 15 die Länge des Stützbügels 4 einzustellen und die Saugnäpfe 8 gegen die Frontscheibe 2 anzudrücken.

Aus der Fig. 1 ist ersichtlich, daß die wirksame Länge des Stützbügels 4 in Pfeilrichtung H verändert werden kann und das Schwenkgelenk 5 ein Verschwenken in Pfeilrichtung S zuläßt.

Aus der Fig. 1 ist ferner ersichtlich, daß das Tablett 3 selbst mehrere Ablageflächen 10, 11, 12 und 13 aufweist. Die Ablagefläche 13 ist in dem Ausführungsbeispiel mit einer solchen Außenkontur versehen, daß auf der Ablagefläche 13 eine Tasse abgestellt werden kann, wobei bei entsprechender Ausbildung des Griffes der Griff gleichzeitig als Drehsicherung dient. Ein Vergleich der Tiefe T mit Bezug auf die Ablageflächen 12 und 13 läßt erkennen, daß die Ablagefläche 12 tiefer ausgebildet ist, beispielsweise, um einer Flasche oder Dose einen ausreichenden Halt zu geben.

Die einzelnen Ablageflächen sind durch allgemein mit 9 bezeichnete Profilstege voneinander getrennt.

Sowohl die Unterseite des Tabletts 3 als auch das freie Ende 14 des Stützbügels 4 können, was in der Zeichnung nicht dargestellt ist, mit einer aus Filz oder Gummi bestehenden Schutzschicht versehen sein, um unerwünschte Spuren auf der Oberfläche des Armaturenbrettes 1 zu vermeiden.

### Bezugszeichenliste

- 1: - Armaturenbrett
- 2: - Frontscheibe
- 3: - Tablett
- 4: - Stützbügel
- 5: - Schwenkgelenk
- 6: - Klemmschraube
- 7: - Tablettunterseite
- 8: - Saugnäpfe
- 9: - Profilstege
- 10: - Ablagefläche
- 11: - Ablagefläche
- 12: - Ablagefläche
- 13: - Ablagefläche
- 14: - freies Ende des Stützbügels
- 15: - Abstützpunkt
- 16: - Armaturen
- 17: - Feststellschraube
- 18: - Teleskoprohr
- 19: - Teleskoprohr
- H: - Pfeil
- S: - Pfeil
- T: - Tiefe
- L: - Länge
- L': - Länge

## Patentansprüche

1. Am Armaturenbrett (1) eines Kraftfahrzeuges angeordnete Ablage, welche als auf dem Armaturenbrett (1) aufliegendes und als an einer Frontscheibe (2) lösbar abgestütztes Tablett (3) ausgebildet ist, wobei an der Tablettunterseite (7) wenigstens eine Stütze angeordnet ist und das Tablett (3) einen Abstützpunkt (15) auf dem Armaturenbrett (1) frontscheibenseitig um etwa zwei Drittel (Länge L) und armaturenseitig um etwa ein Drittel (Länge L') überragt, dadurch gekennzeichnet, daß die Stütze als höhenverstellbarer (Pfeil H) frontscheibenseitig schwenkbar am Tablett (3) angelenkter Stützbügel (4) ausgebildet ist, dessen Schwenkgelenk (5) mittels einer Klemmschraube (6) arretierbar ist, wobei an der der Frontscheibe (2) zugewandten Stirnseite des Tabletts (3) mehrere Haltekonsolen für Saugnäpfe (8) angeordnet sind, und die der Frontscheibe (2) zugewandten Begrenzungsflächen der Haltekonsolen im wesentlichen mit der Frontscheibe (2) fluchtend verlaufen.

2. Ablage nach Anspruch 1, dadurch gekennzeichnet, daß das Tablett (3) mehrere durch Profilstege (9) getrennte Ablageflächen (z.B. 12, 13) unterschiedlicher Tiefe aufweist.

3. Ablage nach Anspruch 1 und 2, dadurch gekennzeichnet, daß einzelne Ablageflächen (z.B. 12,13) die Außenkontur des abzulegenden Gegenstandes aufweisen.

## Claims

1. Shelf, which is disposed on the dashboard (1) of an automotive vehicle and is configured as a tray (3), which rests on the dashboard (1) and is detachably supported on a front windscreen (2), at least one support being disposed on the tray underside (7), and the tray (3) protruding beyond a supporting point (15) on the dashboard (1) by substantially two-thirds (length L) at the front windscreen side and by substantially one-third (length L') at the instrument side, characterised in that the support is configured as a vertically adjustable (arrow H) supporting leg (4), which is pivotably mounted on the tray (3) at the front windscreen side, and the pivot joint (5) of which leg is lockable by means of a securing screw (6), a plurality of retaining brackets for suction cups (8) being disposed on the side face of the tray (3) facing the front windscreen (2), and the boundary faces of the retaining brackets facing the front windscreen (2) extending substantially in alignment with the front windscreen (2).

2. Shelf according to claim 1, characterised in that the tray (3) has a plurality of storage areas (e.g. 12, 13) of different depth, which are separated by profile webs (9).

3. Shelf according to claims 1 and 2, characterised in that individual storage areas (e.g. 12, 13) have the outline of the article to be deposited therein.

## Revendications

1. Vide-poches disposé sur le tableau de bord (1) d'un véhicule automobile, qui est réalisé en tant que plateau (3) reposant sur le tableau de bord (1) et soutenu de manière amovible contre un pare-brise (2), sur la face inférieure (7) du plateau étant disposé au moins un appui et le plateau (3) dépassant d'un point d'appui (15) sur le tableau de bord (1), d'environ deux tiers (longueur L) côté pare-brise et d'environ un tiers (longueur L') côte tableau de bord, caractérisé en ce que l'appui est réalisé en tant qu'étrier d'appui (4) articulé sur le plateau (3) pouvant pivoter de manière réglable en hauteur (flèche H) côté pare-brise, étrier d'appui dont l'articulation de pivotement (5) peut être bloquée au moyen d'une vis de serrage (6), sur le côte frontal du plateau (3), tourné vers le parc-brise (2), étant disposées plusieurs consoles de maintien pour des ventouses (8) et les surfaces de délimitation des consoles de maintien, tournées vers le pare-brise (2), étant sensiblement alignées avec le pare-brise (2).

2. Vide-poches selon la revendication 1, caractérisé en ce que le plateau (3) présente plusieurs surfaces de rangement (par exemple 12, 13) de profondeurs différentes, séparées par des cloisons profilées (9).

3. Vide-poches selon les revendications 1 et 2, caractérisé en ce que certaines surfaces de rangement (par exemple 12, 13) présentent le contour extérieur de l'objet à ranger.
